Europäisches Patentamt

European Patent Office

Office européen des brevets

(19)

(11) Veröffentlichungsnummer: **0 185 839**
**B1**

(12) **EUROPÄISCHE PATENTSCHRIFT**

(45) Veröffentlichungstag der Patentschrift: **12.09.90**

(51) Int. Cl.⁵: **B 29 C 49/50, B 26 F 1/24, B 32 B 5/18, G 10 K 11/16**

(21) Anmeldenummer: **85109039.9**

(22) Anmeldetag: **19.07.85**

(54) Schaumstoff-Schallabsorptionskörper.

(30) Priorität: **14.12.84 DE 3445656**

(43) Veröffentlichungstag der Anmeldung:
**02.07.86 Patentblatt 86/27**

(45) Bekanntmachung des Hinweises auf die
Patenterteilung:
**12.09.90 Patentblatt 90/37**

(84) Benannte Vertragsstaaten:
**AT BE CH DE FR GB IT LI LU NL SE**

(56) Entgegenhaltungen:
**WO-A-84/02998**
**DE-A-2 704 225**
**FR-A-2 170 783**
**FR-A-2 431 368**
**GB-A- 838 859**
**US-A-3 753 830**

(73) Patentinhaber: **Irbit Research + Consulting AG**
**Rue Saint Pierre 24**
**CH-1701 Fribourg (CH)**

(72) Erfinder: **Tschudin-Mahrer, Rolf**
**Römerstrasse 23**
**CH-4415 Lausen (CH)**

(74) Vertreter: **Rieder, Hans-Joachim, Dr.**
**Corneliusstrasse 45 Postfach 11 04 51**
**D-5600 Wuppertal 11 (DE)**

EP 0 185 839 B1

**Beschreibung**

Die Erfindung bezieht sich auf einen Schaumstoff-Schallabsorptionskörper mit Flächenverbindung zwischen einer luftdurchlässigen Schaumstoffschicht und einer mit Durchbrechungen ausgestatteten Stabilisierungslage.

Es ist bekannt, offenzelligen Schaumkunststoffe zur Schallabsorption einzusetzen, wozu auf die WO 84/02998 verwiesen wird. Zur Stabilisierung der recht dünnwandigen, luftdurchlässigen Schaumkunststoffschicht wird ein Gitter eingebettet. Die Optimierung der Schallabsorption besteht dabei weiter auch in der Einhaltung einer bestimmten Abstandsstelle zur reflektierenden Wand bzw. Geräuschquelle. Hierbei treten zufolge sorgfältiger Abstimmung auf die Intensität der verschiedenen Geräuschquellen u.U. erhebliche Tiefzieh-Ausformungen auf, welche das eingelegte, die Durchbrechungen bringende Gitter naturgemäß stark belasten können. Es kann zu Rissen in wichtigen Armierungsbereichen kommen, was der Gebrauchsstabilität abträglich ist.

Aufgabe der Erfindung ist es, unter Beibehaltung des Prinzips des strömungsoptimierten Absorbers einen Schaumstoff-Schallabsorptionskörper zu schaffen, der selbst bei extremer Reliefstruktur einen homogenen Strömungswiderstandswert aufweist, dies bei trotzdem hoher Festigkeit und einfacher Herstellung.

Gelöst ist diese Aufgabe gemäß der Erfindung dadurch, daß die Stabilisierungslage eine unter Wärmeverformung gegen die Schaumstoffschicht gedrückte Breitseitenwand eines Unterfütterungs-Hohlkörpers ist, dessen Durchbrechungen aus von der Schaumstoffseite her gestochenen Löchern bestehen.

Zufolge solcher Ausgestaltung ist ein gattungsgemäßer strömungsoptimierter Schallabsorptions-Hohlkörper geschaffen, der bei geringstem Materialaufwand und hoher Form-Anpassungsfähigkeit einen noch weiter verbesserten Wirkungsgrad bringt. Der Einsatz bspw. thermoplastischen Kompaktmaterials zur Erzeugung der Gitterschicht erweist sich auch als fertigungstechnisch äußerst günstig. Die von der Schaumstoffseite her gestochenen Löcher lassen sich in ihrer Häufung bzw. Dichte sogar individuell vorsehen. Hierdurch wird unterschiedlichen Geräuschquellenzonen noch besser Rechnung getragen. Die bei der Lochung möglicherweise entstehenden Lochkragen stehen in den Hohlraum des Hohlkörpers vor; sie bedürfen keiner Nachbearbeitung. Die außenseitigen, trichterartigen Lochverbreiterungen stellen sogar besonders wirksame Kollektoren dar. Die Löcher lassen sich in besonders ökonomischer Weise beim Formen des Unterfütterungs-Hohlkörpers gleich mitberücksichtigen, wenngleich dies auch in einem nachgeschalteten bzw. separaten Arbeitsgang erfolgen könnte. Die Fertigung läßt sich dann auf herkömmlichen Werkzeugen durchführen. Hier bietet sich besonders das Blasformverfahren an. Die Schaumstoffschicht wird in die Form eingelegt. Es erfolgt das Extrudieren eines Schlauches. Der Blasdorn fährt in den Schlauch ein. Das Werkzeug schließt. Der Schlauch wird nun aufgeblasen. Er nimmt die Werkzeugkontur an, und zwar sowohl im Hinblick auf die die Breitseitenwand formende Formhälfte als auch in Bezug auf die die Trägerkontur aufweisende Formhälfte. Nach einer gewissen Abkühlphase fährt von der Schaumstoffseite her ein Nadelwerkzeug ein mit dem Ziel der erläuterten Lochung. Nach weiterem Abkühlen fährt das Nadelwerkzeug zurück. Das Werkzeug öffnet sich. Das fertige Werkstück fällt heraus. Beim normalen Warmumformverfahren wird entsprechend vorgegangen mit dem Unterschied, daß statt eines schlauchförmigen Ausgangskörpers zwei Lagen in das Werkzeug eingeführt werden, von denen die eine die Stabilisierungslage und die andere die Trägerschicht bildet. Das Ausformen mag dabei durch zentralen Überdruck oder durch außenseitiges Vakuum bewirkt werden. Ein wirtschaftliches Werkzeug zur Herstellung eines solchen Schaumstoff-Schallabsorptionskörpers ist in vorteilhafter Weise dahingehend gestaltet, daß die Wand der einen Formhälfte mit Durchbrechungen ausgestattet ist, in welchen Durchstechnadeln verschieblich geführt sind, welche, über die Innen-Konturenfläche der Formhälfte hinaustretend, bis in eine Abstandsstellung zur InnenKonturfläche der anderen Formhälfte reichen, so daß die Trägerschicht nicht mitgelocht wird.

Der Gegenstand der Erfindung einschließlich Werkzeug sind nachstehend anhand eines zeichnerisch veranschaulichten Ausführungsbeispieles näher erläutert. Es zeigt

Fig. 1 die Herstellung des Schaumstoff-Schallabsorptionskörpers unter Anwendung des Blasformverfahrens, und zwar bei noch nicht geschlossenem Werkzeug,

Fig. 2 die Herstellung des Schallabsorptionskörpers unter Anwendung des Warmumformverfahrens,

Fig. 3 das nach diesem Verfahren hergestellte Produkt im Längsschnitt und

Fig. 4 eine Herausvergrößerung einer Lochungspartie.

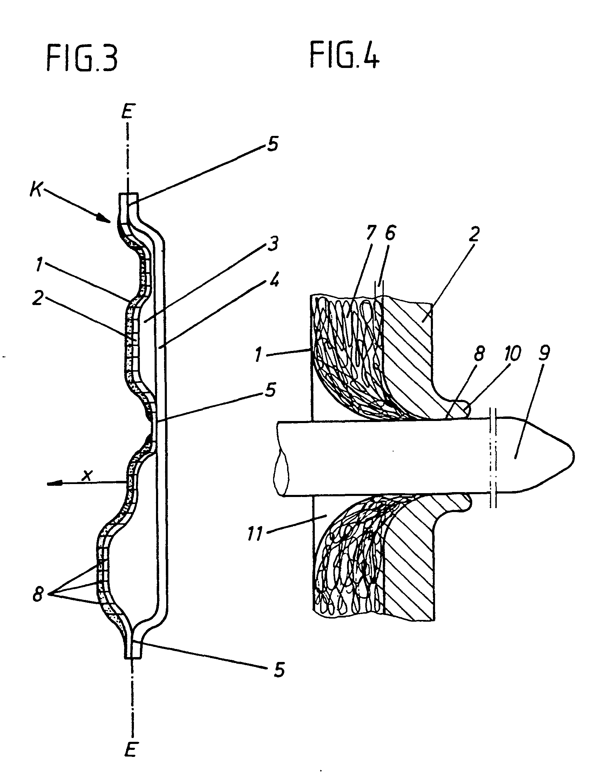

Der in den Fig. 3 und 4 abgebildete Schaumstoff-Schallabsorptionskörper ist als Hohlkörper K realisiert. Sein Hohlraum kann noch unterteilt, also gekammert sein.

Der Hohlkörper K setzt sich zusammen aus einer außenliegenden Schaumstoffschicht 1 aus offenzelligem, gegebenenfalls strukturverdichtetem, luftdurchlässigem Schaumkunststoff. Letztere liegt geräuschquellenseitig. Dahinter erstreckt sich eine schalltransparente Stabilisierungslage 2. Es folgt der Hohlraum 3, welcher durch eine sogenannte Trägerschicht 4 begrenzt ist. Letztere kann dickwandiger sein als die Lage 2.

Stabilisierungslage 2 und Trägerschicht 4 bestehen aus thermoplastischem Kompaktmaterial. Stabilisierungslage 2 und Trägerschicht 4 sind randverbunden. Unter Erzielung einer Kammerung ist bspw. auch der Mittelbereich der Stabilisierungslage 2 noch mit dem korrespondierenden Bereich der Trägerschicht verbunden. Die von Siegelzonen gebildeten Verbindungsstellen tragen das Bezugszeichen 5.

Während die Stabilisierungslage 2, bezogen auf die die randseitige Siegelzone bzw. Fuge schneidende Ebene E-E, beidseitig in eine starke Stufung übergeht, weist die Trägerschicht 4 eine im wesentlichen nur wannenförmige, also einen ebenen Boden tragende Querschnittsform auf. Durch dieses Ausstellen partieller Abschnitte aus der allgemeinen Ebene E-E wird der Abstand zur schallharten Wand (z.B. Motorhaube eines Kraftfahrzeuges) variiert. Solche Einziehungen können topfförmiger oder nierenförmiger Gestalt sein. Auch ist eine Stufenpyramide denkbar. Einer dieser frequenzabhängig unterschiedlich zu wählenden Abstände ist mit x bezeichnet. Eine ausführliche Erörterung enthält die Anmeldung WO 84/02998.

Die Stabilisierungslage 2 ist unter Wärmeverformung gegen die Schaumstoffschicht 1 gedrückt. Letzteres führt zu einer festen Anbindung der der Geräuschquelle abgewandten Grenzschicht 6 der Schaumstoffschicht 1 an der korrespondierenden Oberfläche der die eine Breitseitenwand des Unterfütterungs-Hohlkörpers K bildenden Stabilisierungslage 2. Der leicht erweichte Kunststoff dringt etwas in die Poren 7 der Schaumstoffschicht 1 ein und findet dort eine hochgradige, allerdings nicht sehr in die Tiefe gehende Verankerung, so daß der überwiegende Schaumstoffanteil seine Struktur behält, d.h. offene Poren 7. Der trotzdem vorliegende, gut haltbare Flächenverbund ist durch Schraffurübertritt in Fig. 4 mehr symbolisch kenntlich gemacht.

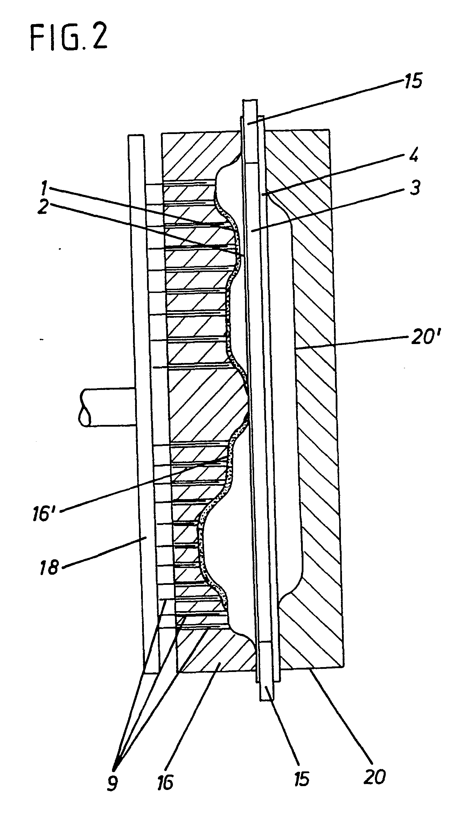

Zur Erzielung des angestrebten Luftdurchlasses ist die aus thermoplastischem Kompaktmaterial bestehende Stabilisierungslage 2 mit von der Schaumstoffschicht-Seite her gestochenen Löchern 8 versehen. Der Perforationsvorgang ergibt sich aus Fig. 2. Die außen von der Breitseitenwand her eintretende Nadel 9 zieht das Material der Stabilisierungslage 2 in Richtung des Hohlraumes 3 etwas kragenartig ein. Der Kragen trägt das Bezugszeichen 10. Vor dem Kragen entsteht außenseitig ein Trichter 11, dies sowohl in der Schaumstoffschicht 1 als auch in der Stabilisierungslage 2. Der Nadeldurchmesser beträgt ca. 1mm. Der Lochkragen 11 braucht nicht entfernt zu werden, da er in eine der Sicht entzogene Zone hineinwandert, und zwar in den Hohlraum 3.

Um bspw. auf einen Strömungswiderstand von ca. 80 Rayl (entspricht 800 NS/m³) einzustellen, müssen bei einer Schaumstoffschicht mindestens 2% der Gesamtfläche der Breitseitenwand gelocht werden. Dies bedeutet 10 Löcher a Durchmesser 1 mm auf 1000 mm². Bei einer völlig schaumstofffreien Version müßte der Anteil an Löchern ca. 3-fach höcherliegen.

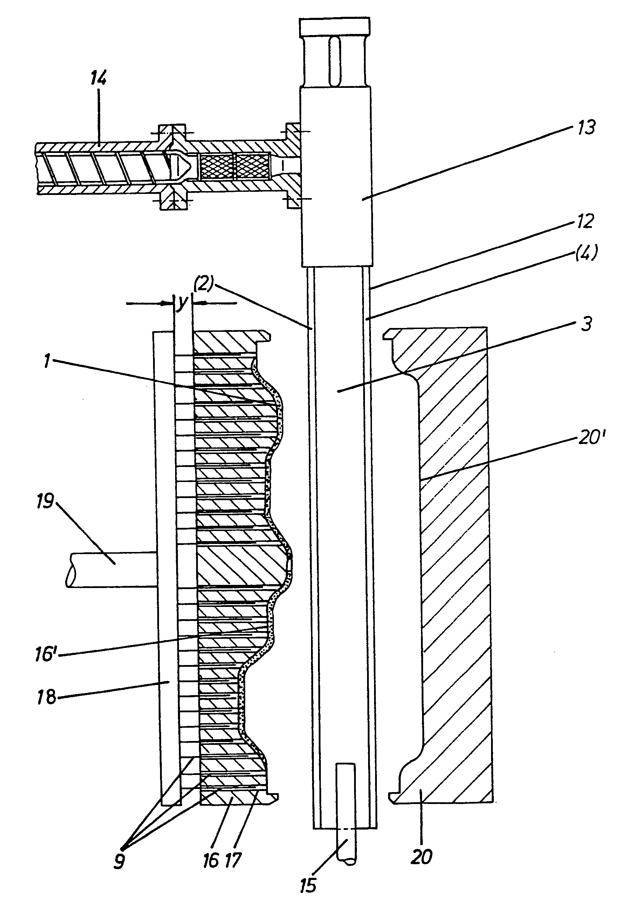

Als Herstellungsverfahren bietet sich das in Fig. 1 zeichnerisch festgehaltene Blasformverfahren an oder das in Fig. 2 wiedergegebene Warmumformverfahren. Während beim letztgenannten Verfahren die die Stabilisierungslage 2 bildende eine Breitseitenwand und die Trägerschicht 4 als andere Breitseitenwand aus separaten thermoplastischen Kunststoffplatten bestehen, werden bei dem Verfahren gemäß Fig. 1 beide Wände von ein und demselben Grundkörper gebildet, nämlich aus einem thermoplastischen Schlauch 12. Man kann vorgefertigte Schläuche für das Blasverfahren erwärmen; in der Regel wird aber das Hohlkörperblasen direkt mit der Schlauchherstellung kombiniert. Der heiße, aus dem Speicherkopf 13 des Extruders 14 tretende Schlauch fährt in das geöffnete Werkzeug W. Letzteres entspricht im Prinzip dem Einlegen der Platten gemäß Fig. 2. Ein Blasdorn 15 fährt in den Schlauch bzw. zwischen die Platten. Das Werkzeug schließt. Der Schlauch oder die bpsw. auch endlos zugeführten platten werden abgetrennt. Es folgt nun das Aufblasen, wobei der sich bildende Hohlkörper exakt die Werkzeuginnenkontur annimmt. Es schließt nun eine Kühlphase an. Während dieser Kühlphase werden die Löcher gestochen. Die Wand der die Stabilisierungslage 2 ausformenden Formhälfte 16 weist Durchbrechungen 17 auf. Letztere erstrecken sich quer zur Ebene E-E des Produkts. In diesen Durchbrechungen 17 erstrecken sich die darin verschieblich angeordnete Durchstechnadeln 9. Letztere gehen von einer gemeinsamen Grundplatte 18 aus, welche über eine zentrale Stange 19 gesteuert bzw. bewegt wird. Der Verlagerungshub y des Stößels ist so abgestimmt, daß nur die Stabilisierungslage 2 perforiert wird. Die Durchstechnadeln 9 überragen die Innenkontur 16' der Formhälfte 16 daher nur bis in eine Abstandsstellung zur Innen-Konturfläche 20' der anderen Formhälfte 20.

Das Werkzeug W kühlt weiter ab. Das Nadelwerkzeug fährt zurück. Es folgt das Öffnen des Werkzeuges. Das fertige Bauteil fällt heraus. Statt über eine die Schlauchwandung oder die Platten von innen her gegen die jeweiligen Formhälften andrückende Kraft besteht natürlich auch die Möglichkeit, an den Innenflächen 16', 20' Mündungen einer Vakuumpumpe enden zu lassen, so daß hierdurch die konturengenauen Abdrücke der Sichtflächen des Produkts erzeugt werden.

**Patentanspruch**

Schaumstoff-Schallabsorptionskörper mit Flächenverbindung zwischen einer luftdurchlässigen Schaumstoffschicht (1) und einer mit Durchbrechungen ausgestatteten Stabilisierungslage (2), dadurch gekennzeichnet, daß die Stabilisierungslage (2) eine unter Wärmeverformung gegen die Schaumstoffschicht (1) gedrückte Breitseitenwand eines Unterfütterungs-Hohlkörpers (K) ist, dessen Durchbrechungen aus von der Schaumstoffseite her gestochenen Löchern bestehen.

**Revendication**

Corps d'absorption phonique en mousse comportant une liaison de surface entre une couche de mousse (1) perméable à l'air et une couche de renfort (2) munie de passages, caractérisé par le fait que la couche de renfort (2) est une paroi formant la face d'un corps creux (K) de rembourrage appuyée avec formage à chaud contre la couche de mousse (1), les passages du corps creux étant constitués par des trous percés à partir du côté de la mousse.

**Claim**

Foam sound-absorbing article having a laminated bond between an air-permeable foam layer (1) and a strengthening layer (2) which has been provided with openings, characterized in that the strengthening layer (2) which has been provided with openings, characterized in that the strengthening layer (2) is the breast wall of a hollow lining article (K) the said breast wall having been pressed by thermoforming against the foam layer (1) and the openings in the said article consisting of holes which have been punched from the foam side.

FIG.2

FIG.3

FIG.4